# EUROPEAN PATENT SPECIFICATION

(11) **EP 2 722 630 B1**
(45) Date of publication and mention of the grant of the patent: **21.12.2016**
(21) Application number: 12800381.1
(22) Date of filing: 18.06.2012
(51) Int. Cl.: F28D 7/00, F28F 5/00, F28F 13/06, F28D 11/00, F28D 7/16, F28F 9/02, F28F 19/00, C02F 11/12, C02F 11/18, F28D 21/00, F28G 1/08

(54) **TUBULAR HEAT EXCHANGER**
ROHRFÖRMIGER WÄRMETAUSCHER
ÉCHANGEUR DE CHALEUR TUBULAIRE

(30) Priority: 16.06.2011 ES 201131013
(43) Date of publication of application: 23.04.2014
(73) Proprietor: Aurum Foods, S.L., 30008 Murcia (ES)
(72) Inventor: PAGÁN DURÁN, Jesús, E-30008 Murcia (ES)
(74) Representative: Carpintero Lopez, Francisco
(86) International application number: PCT/ES2012/070450
(87) International publication number: WO 2012/172152

(56) References cited:
- EP-A1- 1 918 670
- EP-A2- 2 103 892
- WO-A1-03/095925
- WO-A1-2004/052524
- WO-A1-2011/047475
- GB-A- 1 154 809
- GB-A- 2 309 879
- JP-A- S55 102 888
- KR-B1- 100 802 176
- US-A1- 2008 047 692

## Description

### Technical Field of the Invention

The present invention relates to a tubular heat exchanger configured for transferring heat from a heat transfer fluid to a specific product, or vice versa; where said heat exchange includes heating and cooling processes as well as drying processes; and where the heat exchanger object of the invention is encompassed within the field of food preservation and preparation.

The purpose of this heat exchanger is to perform tasks of heating, cooling or drying products that can be both foods, in a preferred embodiment, and any other type of products that must be heated or cooled, such as sludge in waste water treatment plants, for example. Said exchanger furthermore allows improving the energy efficiency of heat transfer with respect to the exchangers known until now, having a small and compact size, in addition to reducing the heat treatment time depending on the type of product to be treated.

### Background of the Invention

By way of introduction, the use of heat exchangers having a tubular configuration intended for heating or cooling specific products is known; in this sense, said heat exchangers seek to provide a large contact surface between the heat transfer fluid and the product to be treated to thus maximize the heat transfer between them; to that end, a heat exchanger comprising a large tubular sleeve with an inlet for the entrance of the product to be treated, and an outlet for the exit of the already treated product is commonly used; and internally housing a circuit or a plurality of tubes physically isolating the heat transfer fluid from the product to be treated allowing the heat transfer between them. Such heat exchangers are disclosed in WO-A-2004052524, which also discloses the features according to the preamble of claim 1.

Depending on the amount of product to be treated, the sizes of the sleeves vary greatly, even being able to take up very large volumes which make positioning them in closed spaces difficult, and it involves the reduction of space in factories.

In such tubular exchangers, the product to be treated enters through one end of the sleeve, transfers thermal energy to the heat transfer fluid and, is then removed through the area close to the other end of the sleeve; but it is common to find dead areas inside the sleeve, dead areas refer to areas where the product to be treated is housed and remains motionless, or moves at a very low speed through the inside of the sleeve; modifying the treatment time and therefore obtaining products with unwanted or varied temperatures depending on the area of the sleeve where it has been treated.

Due to that drawback, the creation of compartments inside the sleeve of the exchanger is known, where such compartments are obtained by means of dividing with plates which comprise strategically located holes so that the product to be treated must compulsorily circulate through said holes, marking a specific trajectory and improving the energy efficiency of the exchanger as a whole.

However, even though this solution successfully improves the heat transfer with respect to the exchanger that has no compartments, the product does not flow through the entire volume of said compartments inside the chamber, there being small dead areas that, though being much smaller than in the exchanger that has no compartments, continue to cause the production of a treated product the thermal characteristics of which may not be the initially desired characteristics.

Therefore, in view of the aforementioned drawbacks it is necessary to provide a new tubular heat exchanger which allows solving the aforementioned drawbacks in terms of accelerating product heating or cooling time as a result of an improvement in the heat transfer; in addition to reducing the size of the components to not only reduce the manufacturing cost, but rather to also aid in said heat transfer; as well as being formed by simple elements that can be easily maintained and replaced in the event of a breakdown or failure.

### Description of the Invention

The present invention relates to a tubular heat exchanger comprising the following technical features:
- a tubular sleeve comprising an inlet for the entrance of a product to be thermally treated, and an outlet for the exit of said thermally treated product;
- a first plurality of tubes carrying a heat transfer fluid which are located inside the tubular sleeve; where said first plurality of tubes can be of one and the same tube wound inside the exchanger, or can be part of independent tubes with a common inlet for the entrance of the heat transfer fluid, and an also common outlet for the exit of said heat transfer fluid;
- at least one diaphragm located inside the tubular sleeve which divides the interior of the sleeve into at least two chambers, where said diaphragm comprises a central hole configured for allowing the passage of the product from the inlet to the outlet of the sleeve; and where said diaphragm comprises a plurality of holes configured for allowing the passage of the first plurality of tubes carrying the heat transfer fluid through the different chambers of the sleeve; note that the product to be treated enters through the inlet, mandatorily goes through the central hole of said at least one diaphragm, and then leaves through the outlet of the sleeve; and
- a piston comprising a tubular shaft and at least two plates perpendicular to the tubular shaft; where said tubular shaft is configured for performing a longitudinal reciprocating movement through the central hole of said at least one diaphragm; where the shaft comprises a diameter smaller than the diameter of the central hole and allows the passage of product through the annular space defined between the diameter of the central hole and the outer diameter of the shaft; where each plate is located inside each chamber of the sleeve, where each plate comprises at least one hole configured for allowing the passage of the product to be treated; and where each plate comprises a plurality of holes configured for allowing the passage of the first plurality of tubes carrying the heat transfer fluid through respective plates.

It is therefore observed that the exchanger object of the invention comprises a piston that moves in a reciprocal manner through the inside of the sleeve, and where said piston comprises a shaft comprising at least one pair of plates, such that when the shaft moves in a reciprocal manner, the plates preferably move integrally with said shaft; and this causes a displacement of the volume of the sub-chamber created inside each chamber, such that the product to be treated is forced to move depending on the reciprocating movement of the piston.

In this sense, the product to be treated enters through the inlet of the chamber and contacts a chamber inside the sleeve, the piston moves towards the inlet of the sleeve and forces the product to look for alternative paths to reach the proximities of the diaphragm, the product to be treated therefore circulates through said at least one hole of each plate to reach the annular space comprised between the diameter of the central hole of said at least one diaphragm and the outer diameter of the shaft; subsequently, the piston again moves in a reciprocal manner repeating the sequence of movement and circulation of the product to be treated through a second plate; and so on so forth to reach the outlet of the sleeve.

Depending on the location of said at least one hole of each plate for the passage of product to be treated, the product to be treated is forced and directed through a specific path, preventing dead areas and improving the energy efficiency of the heat exchanger object of the invention; additionally reducing the size of the heat exchanger since large surfaces are not needed to achieve a high heat transfer, rather the piston itself increases the heat transfer with its longitudinal reciprocating movement inside the sleeve of the exchanger.

In this sense, the movement of the piston inside each chamber forces the product to move to the side opposite the movement of said piston. Therefore, the product closest to the piston moves from the center of the exchanger towards the periphery (towards the only escape route that it has), traversing the plurality of tubes in a perpendicular manner. The heat transfer that occurs is therefore very efficient since the product to be treated is forced to travel on an indirect path between the tubes through which the heat transfer fluid circulates to the inner periphery of each chamber, the flow not being a laminar flow and a significant turbulence that favors the heat transfer between the product and the heat transfer fluid is produced.

In relation to the composition of both the diaphragm and of the plates of the piston, the following possibilities that are completely complementary to one another are contemplated:
- said at least one diaphragm comprises a pair of metal sheets, and an elastomer sheet located between respective metal sheets; and
- each plate of the piston also comprises a pair of metal sheets, and a polymer sheet located between respective metal sheets the purpose of which is to scrape the inner surfaces of the sleeve.

The elastomer assures the leak-tightness between the corresponding chambers and sub-chambers created by the diaphragm since it seals the space between the outer diameter of the diaphragm and the inner surface of the sleeve, as well as the spaces between the outer surface of the first plurality of tubes carrying the heat transfer fluid and the holes of said at least one diaphragm which said first plurality of tubes go through.

In relation to said first plurality of tubes carrying the heat transfer fluid, the possibility of them being hollow and one of their ends being a blind end is contemplated; where inside said first plurality of tubes a second plurality of tubes is coaxially coupled to each tube, respectively, where both ends of this second plurality of tubes are open ends; and where the heat transfer fluid enters through one of the ends of the second plurality of tubes, circulates towards the second end, contacts the blind end of each of the tubes of the first plurality of tubes, and returns through the annular space comprised between the outer surface of the second plurality of tubes and the inner surface of the first plurality of tubes.

In other words, the first plurality of tubes internally comprises the second plurality of tubes, between outer tube and inner tube, respectively, such that the second plurality of tubes (or tubes for the entry of service fluid) forms a tubular bundle that is inserted into the first plurality of tubes (or blind tubes); such that the heat transfer fluid (or service fluid), reaches the end of each tube of the second plurality of tubes, and contacts the blind end of each tube of the first plurality of tubes, and is therefore forced to continue through the annular space comprised between the outer diameter of each tube of the second plurality of tubes and the inner diameter of each tube of the first plurality of tubes, to reach an outlet.

In this sense, the following possibility is contemplated:
- the first plurality of tubes is coupled to a first base comprising an outlet for the exit of the heat transfer fluid; and
- the second plurality of tubes is coupled to a second base comprising an inlet for the entrance of the heat transfer fluid.

Both bases can thus be hermetically coupled to one another and to one of the ends of the sleeve, where in a preferred embodiment:
1. the inlet for the entrance of the product to be thermally treated is located on a side surface of a first end of the sleeve;
2. the outlet for the exit of the thermally treated product is located radially with respect to a second end of the sleeve; and
3. the set of bases and therefore, the assembly formed by the first and second plurality of tubes carrying the heat transfer fluid are coupled to the second end of the sleeve close to the outlet for the exit of the thermally treated product; such that the space of the exchanger object of the invention is optimized, and the coupling and manufacture thereof is simplified.

In relation to the path which the product to be treated must follow from its entrance into the sleeve to its exit, the possibility of said at least one hole of each plate configured for allowing the passage of the product to be treated being located in the perimeter of each plate is contemplated; therefore and according to the arrangement of the inlets and outlets of the sleeve, and of the hole of said at least one diaphragm, the product to be treated follows the following path or trajectory:
- the product to be treated enters through the inlet located on a side surface of a first end of the sleeve;
- the product to be treated enters a first sub-chamber located between the first end of the sleeve and the first plate of the piston inside the sleeve;
- the piston moves towards the first end of the sleeve and the product goes through the plurality of perimetral holes of said first plate to reach a second sub-chamber located between the first plate and the diaphragm;
- the product goes through the annular space comprised between the outer surface of the shaft of the piston and the hole of said diaphragm;
- the product reaches a third sub-chamber located between the diaphragm and a second plate;
- the piston moves towards the diaphragm, at least one previous longitudinal reciprocating movement having been performed, since respective plates are integral with the longitudinal reciprocating movement of the piston; and the product goes through the plurality of perimetral holes of said second plate to reach a fourth sub-chamber located between the second plate and the second end of the sleeve; and
- the treated product is discharged by the outlet located radially with respect to a second end of the sleeve.

The product to be treated thus follows a trajectory travelling the entire periphery and center of the sleeve, assuring the absence of dead areas; and greatly improving the heat transfer between the product and the plurality of tubes since it has to travel over a large surface and inner volume of the sleeve of the exchanger object of the invention.

In relation to the integral reciprocating translational movement between the shaft and the plates of the piston, the possibility of each plate of the piston comprising a plurality of bars coupled to respective plates is contemplated, such that the movement of the shaft of the piston is integral with the movement of each of the plates; and where said bars go through a plurality of holes of said at least one diaphragm.

It is therefore observed that the plurality of holes of the diaphragm can be used both for the passage of the first plurality of tubes, and of the plurality of bars connecting respective plates of the piston, causing both plates to move integrally with said piston in a simple manner.

Additionally, the possibility of the sleeve comprising at least one draining hole located in the lower portion of said sleeve is contemplated.

Furthermore, in a particular embodiment the possibility of the tubular sleeve comprising a U-shaped cross-section is contemplated; in the form of a tank or vessel which is open at one of its ends, where the plurality of tubes of the heat transfer fluid, the piston with the corresponding plates perpendicular to the shaft of the piston and the diaphragm system are thus located inside said sleeve in the form of a tank. Additionally, the possibility of the tubular sleeve comprising a cover coupled on one of the sides of said tubular sleeve is contemplated; where said cover closes the ends of the U-shaped cross-section and allows sealing the space inside the sleeve, once the product to be treated is poured therein from the upper portion of the sleeve and the inlets for the entrance of the product to be treated can therefore be dispensed with, the existence of holes in the lower portion for subsequent discharge being contemplated.

Finally, the possibility of the shaft of the piston comprising a hydraulic rod is contemplated; such that a correct operation in the reciprocating translational movement of the shaft of the piston is assured; and where the shaft preferably comprises a gasket having at least one fish tape and a catch to assure the absence of product or heat transfer fluid leaks to the outside of the sleeve of the tubular heat exchanger object of the invention.

Therefore, according to the described invention the tubular heat exchanger constitutes a significant novelty in heat exchangers used today and it allows:
1) accelerating product heating or cooling time as a result of an improvement in the heat transfer;
2) simplifying component design to not only reduce the manufacturing cost, but rather to also aid in said heat transfer;
3) obtaining a scraper system for scraping the heat transfer surfaces in contact with the product;
4) reducing the heat treatment time in the event of heat-sensitive products such as in food applications, for example;
5) reducing the use of steel due to its thermal efficiency level;
6) without viscosity limitations;
7) reducing the ratio of heat transfer and pumping power compared to the exchangers existing on the market;
8) allowing energy recovery at high viscosities;
9) obtaining long continuous working times due to the scraped surface thereof;
10) assuring thermal homogeneity;
11) reducing space in factory; and
12) allowing crystallization by freezing, using direct expansion of refrigerant gases.

### Description of the Drawings

To complement the description that is being made and for the purpose of aiding to better understand the features of the invention according to a preferred practical embodiment thereof, a series of drawings is attached as an integral part of said description in which the following is depicted with illustrative and nonlimiting character:
Figure 1 shows a schematic perspective view of the sleeve and the diaphragm internally located with respect to said sleeve.
Figure 2 shows a schematic perspective view of the diaphragm with respective end metal sheets and the intermediate elastomer sheet.
Figure 3 shows a detail of the leak-tightness achieved with the elastomer sheet of said diaphragm.
Figure 4 shows a detail of the passage of the first plurality of tubes carrying the heat transfer fluid through said diaphragm of the exchanger object of the invention.
Figure 5 shows a perspective view of the piston formed by the tubular shaft and respective plates.
Figures 6A, 6B and 6C show three positions where the piston can be seen inside the sleeve, defining different sub-chambers depending on said position.
Figures 7A and 7B show the possible movements of the product to be treated inside the sleeve of the tubular heat exchanger object of the invention.
Figure 8 shows a perspective view of the heat exchanger without including the pluralities of tubes carrying the heat transfer fluid.
Figure 9 shows a perspective view of the first and second plurality of tubes carrying the heat transfer fluid.
Figure 10 shows a detail of the travel of the heat transfer fluid from the second plurality of tubes to the first plurality of tubes.
Figure 11 shows a perspective view of the entire tubular heat exchanger object of the invention.
Figure 12 shows a perspective view of the entire tubular heat exchanger object of the invention in a particular embodiment where the sleeve comprises a U-shaped cross-section.

### Preferred Embodiment of the Invention

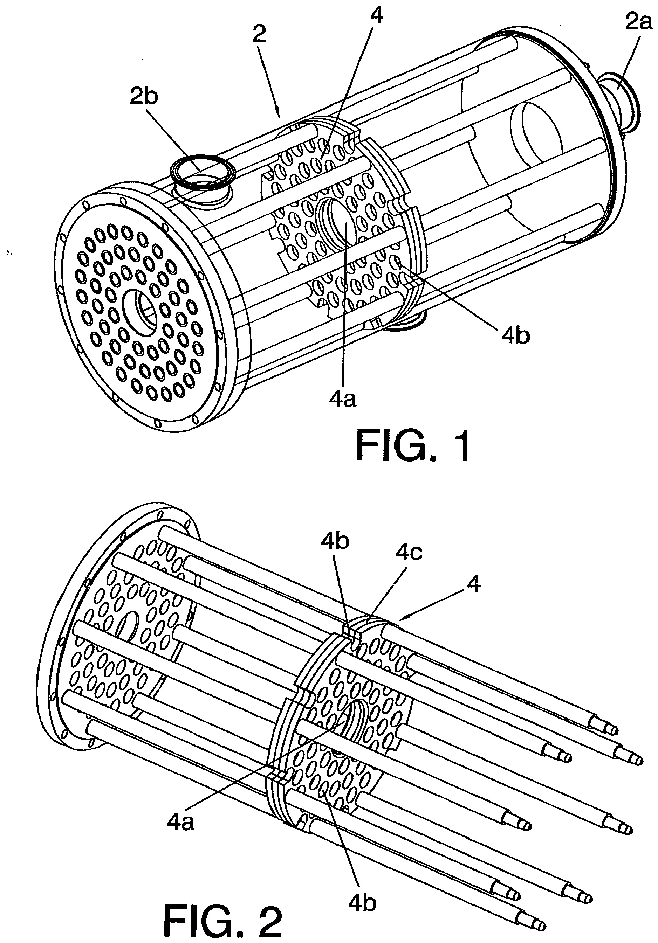

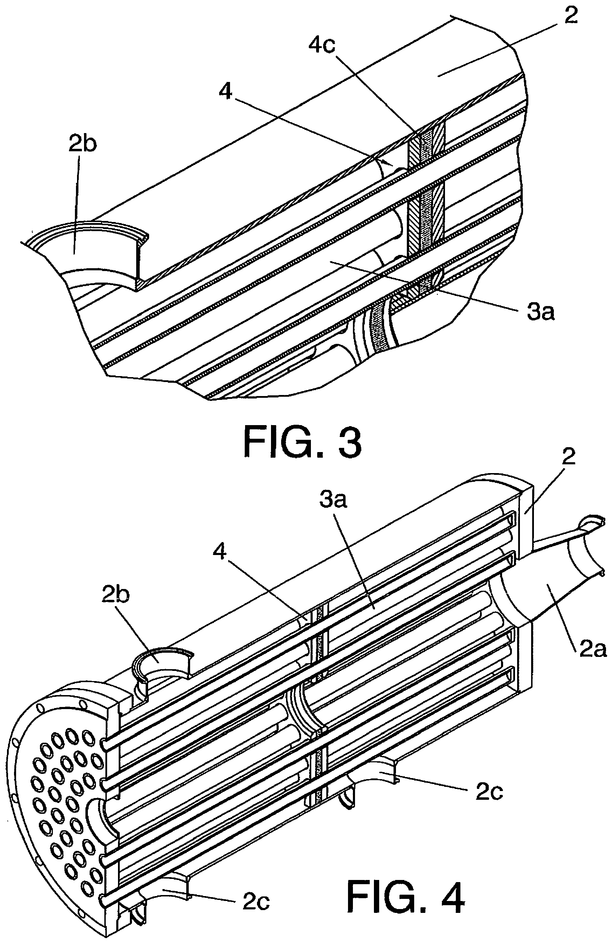

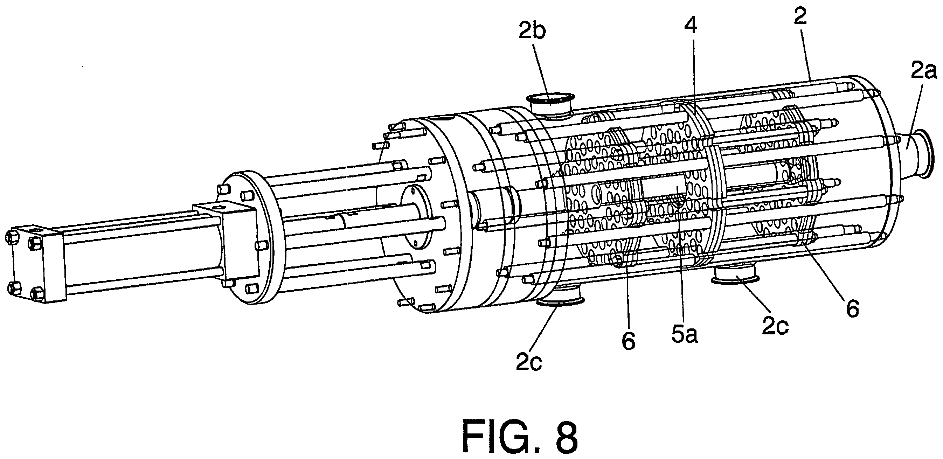

As can be seen in Figures 1 to 11, the tubular heat exchanger (1) described by the invention comprises:
- a tubular sleeve (2) comprising an inlet (2a) for the entrance of a product to be thermally treated, an outlet (2b) for the exit of said thermally treated product, and a pair of draining holes (2c) located in the lower portion of said sleeve (2);
- a first plurality of tubes (3a) carrying a heat transfer fluid which are located inside the tubular sleeve (2);
- a diaphragm (4) located inside the tubular sleeve (2) which divides the interior of the sleeve (2) into two chambers, where said diaphragm comprises a central hole (4a) configured for allowing the passage of the product from the inlet (2a) to the outlet (2b) of the sleeve (2); and where said diaphragm (4) comprises a plurality of holes (4b) configured for allowing the passage of the first plurality of tubes (3a) carrying the heat transfer fluid through the different chambers of the sleeve (2); and
- a piston (5) comprising a tubular shaft (5a) and two plates (6) perpendicular to the tubular shaft (5a) and integral with the movement of said tubular shaft (5a) since said tubular shaft (5a) is configured for performing a longitudinal reciprocating movement through the central hole (4a) of said diaphragm (4); where the tubular shaft (5a) comprises a diameter smaller than the diameter of the central hole (5a) and allows the passage of product through the annular space defined between the diameter of the central hole (4a) and the outer diameter of the tubular shaft (5a); where each plate (6) is located inside each chamber of the sleeve (2), where each plate (6) comprises a plurality of holes (6a) configured for allowing the passage of the product to be treated, such that said plurality of holes (6a) are located in the periphery of each plate (6); and where each plate comprises another plurality of holes (6b) configured for allowing the passage of the first plurality of tubes (3a) carrying the heat transfer fluid through respective plates (6).

It is observed in Figure 2 that the diaphragm (4) comprises a pair of metal sheets (4a, 4b), and an elastomer sheet (4c) located between respective metal sheets (4a, 4b); such that it can withstand the great pressures existing inside the sleeve (2), and additionally the elastomer (4c) acts as a leak-tight element between the two chambers defined by the diaphragm (4).

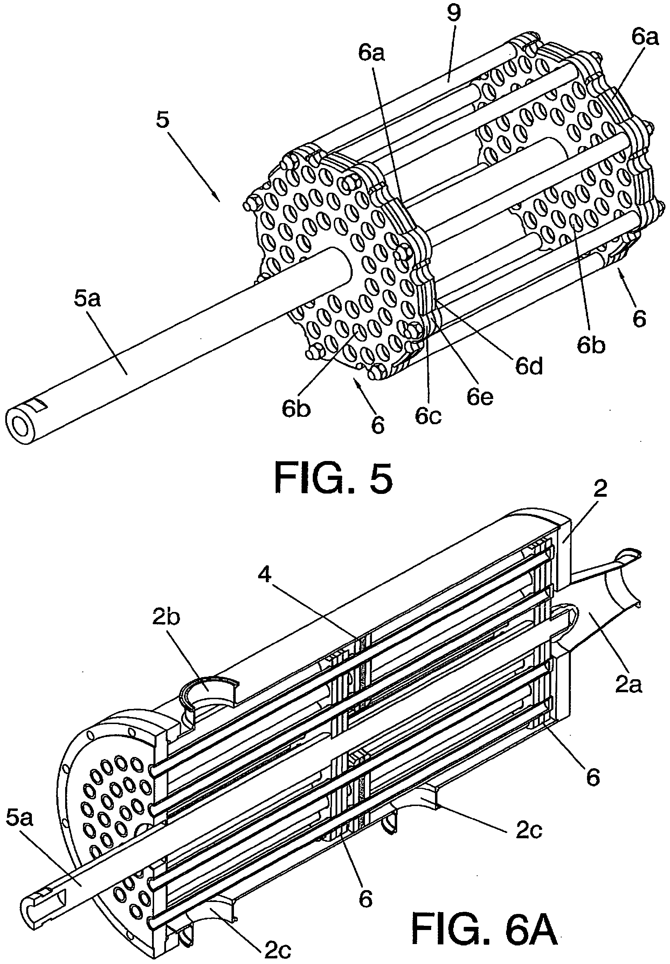

Similarly, it is observed in Figure 5 that each plate of the piston comprises a pair of metal sheets (6c, 6d), and a polymer sheet (6e) located between respective metal sheets (6c, 6d); where the polymer sheet (6e) projects from the metal sheets (6a, 6b) and therefore acts as a scraper element for scraping the product inside each chamber of the sleeve (2), as it is a hard material.

In relation to the integral movement of each plate (6) with the tubular shaft (5a) of the piston, it is observed that each plate (6) comprises a plurality of bars (9) coupled to respective plates (6) such that the movement of the tubular shaft (5a) of the piston (5) is integral with the movement of each of the plates (6); and where said bars (9) go through a plurality of holes (4c) of said diaphragm (4), such that the movement of each plate (6) is identical for the other plates (6), in this case two in number.

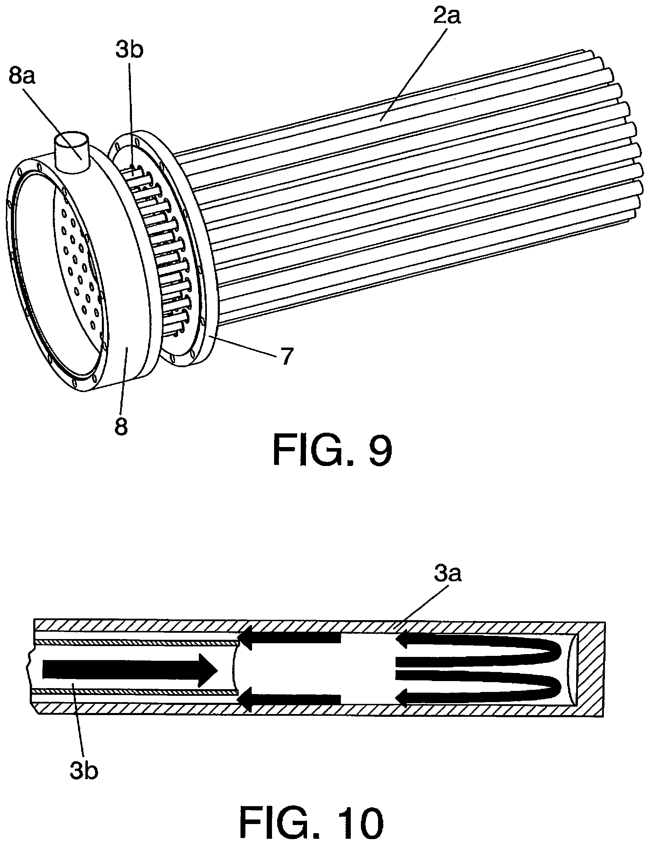

In relation to the tubes carrying the heat transfer fluid, it can be observed in Figures 9 and 10 that the first plurality of tubes (3a) carrying the heat transfer fluid are hollow tubes and one of their ends is a blind end; where inside said first plurality of tubes (3a) a second plurality of tubes (3b) is coaxially coupled to each tube, respectively, where both ends of this second plurality of tubes (3b) are open ends; and where the heat transfer fluid enters through one of the ends of the second plurality of tubes (3b), circulates towards the second end, contacts the blind end of each of the tubes of the first plurality of tubes (3a), and returns through the annular space comprised between the outer surface of the second plurality of tubes (3b) and the inner surface of the first plurality of tubes (3a).

Additionally, it is observed that the first plurality of tubes (3a) is coupled to a first base (7) comprising an outlet (7a) for the exit of the heat transfer fluid; and the second plurality of tubes (3b) is coupled to a second base (8) comprising an inlet (8a) for the entrance of the heat transfer fluid.

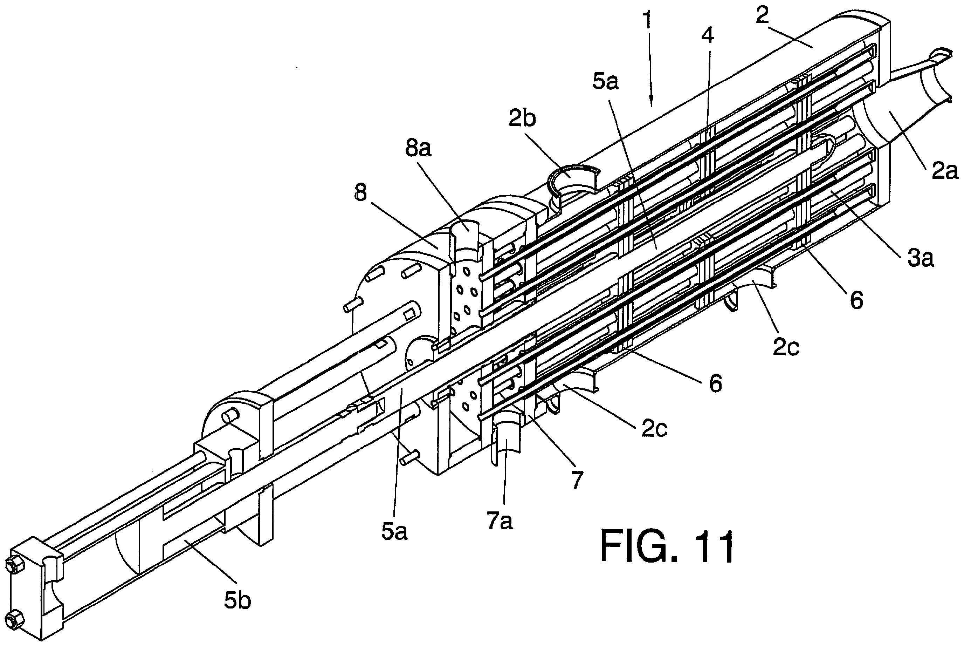

Furthermore, it can be observed in Figure 11 that the tubular shaft (5a) of the piston (5) comprises a hydraulic rod (5b) capable of exerting the necessary pressure to enable performing the reciprocating movement of the piston (5).

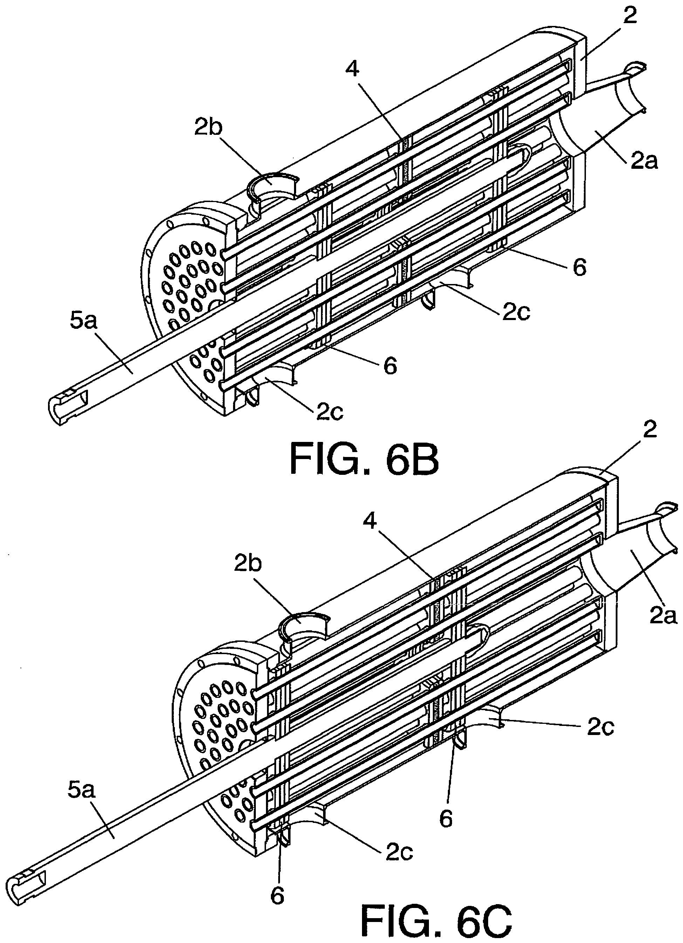

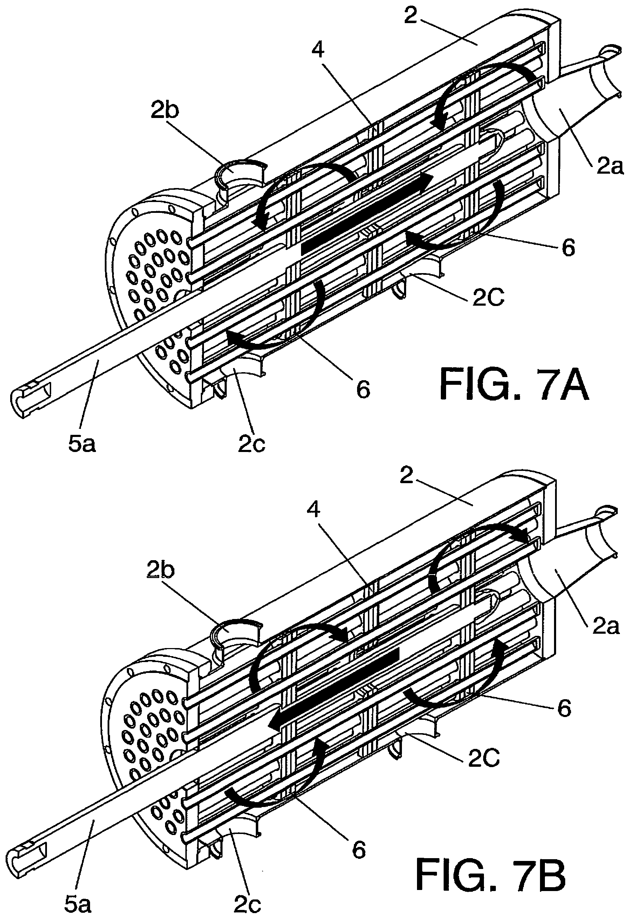

Furthermore, in view of the sequence of drawings shown in Figures 6A, 6B, 6C, 7A and 7B; it can be interpreted that the product to be treated follows the following path or trajectory:
- the product enters through the inlet (2a) of the sleeve (2);
- enters a first sub-chamber located between the first end of the sleeve (2) and the first plate (6) of the piston (5) inside the sleeve;
- the piston (5) moves towards the first end of the sleeve (2), and the product goes through the plurality of perimetral holes (6a) of said first plate (6) to reach a second sub-chamber located between the first plate (6) and the diaphragm (4);
- the product goes through the annular space comprised between the outer surface of the tubular shaft (5a) and the central hole (4a) of said diaphragm (4);
- the product reaches a third sub-chamber located between the diaphragm (4) and the second plate (6);
- the piston (5) moves towards the diaphragm (4);
- the product goes through the plurality of perimetral holes (6a) of said second plate (6) to reach a fourth sub-chamber located between the second plate (6) and the second end of the sleeve (2); and
- the treated product is discharged through the outlet (2b) located radially with respect to a second end of the sleeve (2).

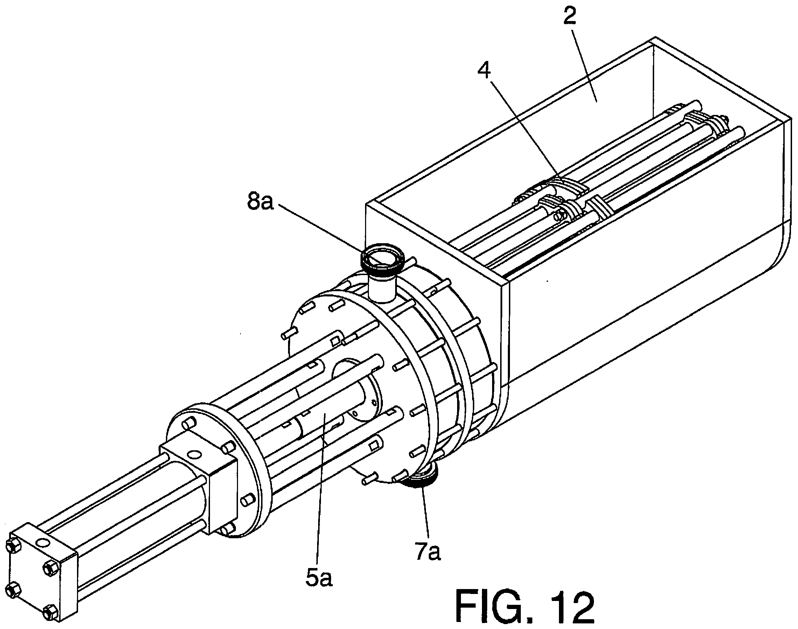

Finally, it can be observed in Figure 12 that in a particular embodiment the tubular sleeve (2) comprises a U-shaped cross-section; said sleeve (2) is open at one of its ends and allows pouring in the product to be treated, as well as discharging the treated product from the open area of said sleeve (2); the possibility of said tubular sleeve (2) comprising a cover coupled on one of the sides of said tubular sleeve (2) being contemplated; where said cover closes the ends of the U-shaped cross-section, assuring the correct heat transfer between the product to be treated and the heat transfer fluid.

In view of this description and set of drawings, the person skilled in the art will understand that the embodiments of the invention which have been described can be combined in many ways within the object of the invention. The invention has been described according to several preferred embodiments thereof, but for the person skilled in the art it will be evident that multiple variations can be introduced in said preferred embodiments without exceeding the object of the claimed invention.

## Claims

1. Tubular heat exchanger (1) comprising
a tubular sleeve (2) comprising an inlet (2a) for the entrance of a product to be thermally treated, and an outlet (2b) for the exit of said thermally treated product;
a first plurality of tubes (3a) carrying a heat transfer fluid which are located inside the tubular sleeve (2); and
at least one diaphragm (4) located inside the tubular sleeve (2) which divides the interior of the sleeve (2) into at least two chambers, where said diaphragm comprises a central hole (4a) configured for allowing the passage of the product from the inlet (2a) to the outlet (2b) of the sleeve (2); and where said diaphragm (4) comprises a plurality of holes (4b) configured for allowing the passage of the first plurality of tubes (3a) carrying the heat transfer fluid through the different chambers of the sleeve (2); the exchanger being **characterized in that** it comprises
a piston (5) comprising a tubular shaft (5a) and at least two plates (6) perpendicular to the tubular shaft (5a); where said tubular shaft (5a) is configured for performing a longitudinal reciprocating movement through the central hole (4a) of said at least one diaphragm (4); where the tubular shaft (5a) comprises a diameter smaller than the diameter of the centra! hole (5a) and allows the passage of product through the annular space defined between the diameter of the central hole (4a) and the outer diameter of the tubular shaft (5a); where each plate (6) is located inside each chamber of the sleeve (2), where each plate (6) comprises at least one hole (6a) configured for allowing the passage of the product to be treated; and where each plate comprises a plurality of holes (6b) configured for allowing the passage of the first plurality of tubes (3a) carrying the heat transfer fluid through respective plates (6).

2. Tubular heat exchanger (1) according to claim 1, **characterized in that** said at least one diaphragm (4) comprises a pair of metal sheets (4a, 4b), and an elastomer sheet (4c) located between respective metal sheets (4a, 4b).

3. Tubular heat exchanger (1) according to any of the preceding claims, **characterized in that** each plate of the piston comprises a pair of metal sheets (6c, 6d) and a polymer sheet (6e) located between respective metal sheets (6c, 6d).

4. Tubular heat exchanger (1) according to any of the preceding claims, **characterized in that** the first plurality of tubes (3a) carrying the heat transfer fluid are hollow tubes and one of their ends is a blind end; where inside said first plurality of tubes (3a) a second plurality of tubes (3b) is coaxially coupled to each tube, respectively, where both ends of this second plurality of tubes (3b) are open ends; and where the heat transfer fluid enters through one of the ends of the second plurality of tubes (3b), circulates towards the second end, contacts the blind end of each of the tubes of the first plurality of tubes (3a), and returns through the annular space comprised between the outer surface of the second plurality of tubes (3b) and the inner surface of the first plurality of tubes (3a).

5. Tubular heat exchanger (1) according to claim 4, **characterized in that**
the first plurality of tubes (3a) is coupled to a first base (7) comprising an outlet (7a) for the exit of the heat transfer fluid; and
the second plurality of tubes (3b) is coupled to a second base (8) comprising an inlet (8a) for the entrance of the heat transfer fluid.

6. Tubular heat exchanger (1) according to any of the preceding claims, **characterized in that** said at least one hole (6a) of each plate (6) which is configured for allowing the passage of the product to be treated is located in the perimeter of each plate (6).

7. Tubular heat exchanger (1) according to any of the preceding claims, **characterized in that** each plate (6) of the piston comprises a plurality of bars (9) coupled to respective plates (6) such that the movement of the tubular shaft (5a) of the piston (5) is integral with the movement of each of the plates (6); and where said bars (9) go through a plurality of holes (4c) of said at least one diaphragm (4).

8. Tubular heat exchanger (1) according to any of the preceding claims, **characterized in that**
the inlet (2a) for the entry of the product to be thermally treated is located on a side surface of a first end of the sleeve (2); and
the outlet (2b) for the exit of the thermally treated product is located radially with respect to a second end of the sleeve (2).

9. Tubular heat exchanger (1) according to any of the preceding claims, **characterized in that** the sleeve (2) comprises at least one draining hole (2c) located in the lower portion of said sleeve (2).

10. Tubular heat exchanger (1) according to any of the preceding claims, **characterized in that** the tubular shaft (5a) of the piston (5) comprises a hydraulic rod (5b).

11. Tubular heat exchanger (1) according to any of the preceding claims, **characterized in that** the tubular sleeve (2) comprises a U-shaped cross-section.

12. Tubular heat exchanger (1) according to claim 11, **characterized in that** the tubular sleeve (2) comprises a cover coupled on one of the sides of said tubular sleeve (2); where said cover closes the ends of the U-shaped cross-section.

## Patentansprüche

1. Röhrenförmiger Wärmetauscher (1) mit:
einer röhrenförmigen Hülse (2) mit einem Eingang (2a) für den Eintritt eines wärmezubehandelnden Produktes und mit einem Ausgang (2b) für den Austritt des wärmebehandelten Produktes;
einer ersten Mehrzahl von Rohrleitungen (3a), welche ein Wärmeübertragungsfluid transportieren und innerhalb der röhrenförmigen Hülse (2) angeordnet sind; und
wenigstens einer Scheidewand (4), welche innerhalb der röhrenförmigen Hülse (2) angeordnet ist und das Innere der Hülse (2) in wenigstens zwei Kammern teilt, wobei die Scheidewand eine zentrale Öffnung (4a) umfasst, welche dazu eingerichtet ist, den Durchgang des Produktes von dem Eingang (2a) an den Ausgang (2b) der Hülse (2) zu ermöglichen; wobei die Scheidewand (4) mehrere Öffnungen (4b) umfasst, welche dazu eingerichtet sind, den Durchtritt der ersten Mehrzahl von Rohrleitungen (3a), welche das Wärmeübertragungsfluid transportieren, durch die verschiedenen Kammern der Hülse (2) zu ermöglichen;
wobei der Wärmetauscher **gekennzeichnet ist durch**:
einen Kolben (5), welcher einen röhrenförmigen Schaft (5a) und wenigstens zwei Platten (6), welche rechtwinklig zu dem röhrenförmigen Schaft (5a) angeordnet sind, umfasst;
wobei der röhrenförmige Schaft (5a) zum Ausführen einer longitudinalen Vor- und Zurückbewegung **durch** die zentrale Öffnung (4a) der wenigstens einen Scheidewand (4) eingerichtet ist;
wobei der röhrenförmige Schaft (5a) einen Durchmesser aufweist, welcher kleiner ist als der Durchmesser der zentralen Öffnung (4a), und den Durchtritt des Produkts durch den ringförmigen Raum, welcher zwischen dem Durchmesser der zentralen Öffnung (4a) und dem äußeren Durchmesser des röhrenförmigen Schafts (5a) definiert ist, ermöglicht;
wobei jede Platte (6) innerhalb jeder Kammer der Hülse (2) angeordnet ist, wobei jede Platte (6) wenigstens eine Öffnung (6a) umfasst, welche dazu eingerichtet ist, den Durchtritt des zu behandelnden Produkts zu ermöglichen; und
wobei jede Platte mehrere Öffnungen (6b) umfasst, welche dazu eingerichtet sind, den Durchtritt der ersten Mehrzahl von Rohrleitungen (3a), welche das Wärmeübertragungsfluid transportieren, **durch** die entsprechenden Platten (6) zu ermöglichen.

2. Röhrenförmiger Wärmetauscher (1) nach Anspruch 1,
**dadurch gekennzeichnet,**
**dass** die wenigstens eine Scheidewand (4) ein Paar metallischer Bleche (4a, 4b) und eine elastomere Platte (4c), welche zwischen den metallischen Blechen (4a, 4b) angeordnet ist, umfasst.

3. Röhrenförmiger Wärmetauscher (1) nach einem der vorangehenden Ansprüche,
**dadurch gekennzeichnet,**
**dass** jede Platte des Kolbens ein Paar metallische Bleche (6c, 6d) und eine polymere Platte (6e), welche zwischen den metallischen Blechen (6c, 6d) angeordnet ist, umfasst.

4. Röhrenförmiger Wärmetauscher (1) nach einem der vorangehenden Ansprüche,
**dadurch gekennzeichnet,**
**dass** die erste Mehrzahl von Rohrleitungen (3a), welche das Wärmeübertragungsfluid transportieren, hohle Rohrleitungen sind und eines ihrer Enden ein geschlossenes Ende ist; wobei innerhalb der ersten Mehrzahl von Rohrleitungen (3a) eine zweite Mehrzahl von Rohrleitungen (3b) koaxial mit jeder entsprechenden Rohrleitung verbunden ist, wobei beide Enden der zweiten Mehrzahl von Rohrleitungen (3b) offene Enden sind; und
wobei das Wärmeübertragungsfluid durch eines der Enden der zweiten Mehrzahl von Rohrleitungen (3b) eintritt, in Richtung des zweiten Endes zirkuliert, das geschlossene Ende der Rohrleitungen der ersten Mehrzahl von Rohrleitungen (3a) kontaktiert und durch den ringförmigen Raum, welcher zwischen der äußeren Oberfläche der zweiten Mehrzahl von Rohrleitungen (3b) und der inneren Oberfläche der ersten Mehrzahl von Rohrleitungen (3a) gebildet wird, zurückfließt.

5. Röhrenförmiger Wärmetauscher (1) nach Anspruch 4,
**dadurch gekennzeichnet,**
**dass** die erste Mehrzahl von Rohrleitungen (3a) mit einem ersten Grundkörper (7), welcher einen Ausgang (7a) für den Austritt des Wärmeübertragungsfluids aufweist, gekoppelt ist; und
die zweite Mehrzahl von Rohrleitungen (3b) an einen zweiten Grundkörper (8), welcher einen Eingang (8a) für den Eintritt des Wärmeübertragungsfluids umfasst, gekoppelt ist.

6. Röhrenförmiger Wärmetauscher (1) nach einem der vorangehenden Ansprüche,
**dadurch gekennzeichnet,**
**dass** die wenigstens eine Öffnung (6a) jeder Platte (6), welche dazu eingerichtet ist, den Durchtritt des zu behandelnden Produkts zu ermöglichen, am Umfang der Platte (6) angeordnet ist.

7. Röhrenförmiger Wärmetauscher (1) nach einem der vorangehenden Ansprüche, **dadurch gekennzeichnet,**
**dass** jede Platte (6) des Kolbens mehrere Stäbe (9) umfasst, welche mit den entsprechenden Platten (6) verbunden sind, sodass die Bewegung des röhrenförmigen Schafts (5a) des Kolbens (5) zusammen mit der Bewegung jeder der Platten (6) erfolgt; wobei die Stäbe (9) durch eine Mehrzahl von Öffnungen (4c) der wenigstens einen Scheidewand (4) hindurchtreten.

8. Röhrenförmiger Wärmetauscher (1) nach einem der vorangehenden Ansprüche,
**dadurch gekennzeichnet,**
**dass** der Eingang (2a) für den Eintritt des wärmezubehandelnden Produkts an einer Seitenfläche eines ersten Endes der Hülse (2) angeordnet ist; und der Ausgang (2b) für den Austritt des wärmebehandelten Produkts radial bezüglich eines zweiten Endes der Hülse (2) angeordnet ist.

9. Röhrenförmiger Wärmetauscher (1) nach einem der vorangehenden Ansprüche,
**dadurch gekennzeichnet,**
**dass** die Hülse (2) wenigstens eine Ablauföffnung (2c) umfasst, welche in einem unteren Abschnitt der Hülse (2) angeordnet ist.

10. Röhrenförmiger Wärmetauscher (1) nach einem der vorangehenden Ansprüche,
**dadurch gekennzeichnet,**
**dass** der röhrenförmige Schaft (5a) des Kolbens (5) eine hydraulische Kurbelstange (5b) umfasst.

11. Röhrenförmiger Wärmetauscher (1) nach einem der vorangehenden Ansprüche,
**dadurch gekennzeichnet,**
**dass** die röhrenförmige Hülse (2) einen U-förmigen Querschnitt aufweist.

12. Röhrenförmiger Wärmetauscher (1) nach Anspruch 11,
**dadurch gekennzeichnet,**
**dass** die röhrenförmige Hülse (2) eine Abdeckung aufweist, welche mit einer der Seiten der röhrenförmigen Hülse (2) verbunden ist, wobei die Abdeckung die Enden des U-förmigen Querschnitts schließt.

## Revendications

1. Echangeur de chaleur tubulaire (1) comprenant :
un manchon tubulaire (2) comprenant une entrée (2a) pour permettre l'admission d'un produit devant être traité thermiquement et une sortie (2b) pour permettre l'évacuation de ce produit traité thermiquement,
un premier ensemble de tubes (3a) transportant un fluide de transfert de chaleur qui sont situés à la partie interne du manchon tubulaire (2), et
au moins un diaphragme (4) situé à la partie interne du manchon tubulaire (2) qui subdivise la partie interne du manchon (2) en au moins deux chambres, ce diaphragme (4) ayant un perçage central (2a) conformé pour permettre le passage du produit de l'entrée (2a) à la sortie (2b) du manchon (2), et comprenant un ensemble de perçages (4b) conformé pour permettre le passage des tubes du premier ensemble de tubes (3a) transportant le fluide de transfert de chaleur au travers des différentes chambres du manchon (2),
cet échangeur étant **caractérisé en ce qu'**
il comprend :
un piston (5) comprenant une tige tubulaire (5a) et au moins deux plaques (6) perpendiculaires à la tige tubulaire (5a), cette tige tubulaire (5a) étant conformée pour effectuer un mouvement longitudinal en va-et-vient au travers du perçage central (4a) du diaphragme (4), ayant un diamètre inférieur au diamètre du perçage central (4a) et permettant le passage du produit dans l'espace annulaire défini entre le diamètre du perçage central (4a) et le diamètre externe de la tige tubulaire (5a), chaque plaque (6) étant située à la partie interne de chaque chambre du manchon (2), comprenant au moins un perçage (6a) conformé pour permettre le passage du produit à traiter, et un ensemble de perçages (6b) conformé pour permettre le passage des tubes du premier ensemble de tubes (3a) transportant le fluide de transfert de chaleur au travers des plaques respectives (6).

2. Echangeur de chaleur tubulaire (1) conforme à la revendication 1, **caractérisé en ce que**
le diaphragme (4) comprend une paire de feuilles métalliques (4a, 4b) et une feuille en élastomère (4c) située entre les feuilles métalliques (4a ; 4b) respectives.

3. Echangeur de chaleur tubulaire (1) conforme à l'une quelconque des revendications précédentes,
**caractérisé en ce que**
chaque plaque du piston comprend une paire de feuilles métalliques (6c, 6d) et une feuille en polymère (6e) située entre les feuilles métalliques (6c, 6d) respectives.

4. Echangeur de chaleur tubulaire (1) conforme à l'une quelconque des revendications précédentes,
**caractérisé en ce que**
les tubes du premier ensemble de tubes (3a) transportant le fluide de transfert de chaleur sont des tubes creux dont l'une de leurs extrémités est fermée, à la partie interne des tubes du premier ensemble de tubes (3a), sont respectivement coaxialement couplés des tubes d'un second ensemble de tubes (3b), les deux extrémités des tubes du second ensemble de tubes (3b) sont ouvertes, et le fluide de transfert de chaleur est admis par l'une des extrémités des tubes du second ensemble de tubes (3b), circule vers leur seconde extrémité, vient en contact avec l'extrémité fermée de chacun des tubes du premier ensemble de tubes (3a) et revient par l'espace annulaire compris entre la surface externe des tubes du second ensemble de tubes (3b) et la surface interne des tubes du premier ensemble de tubes (3a).

5. Echangeur de chaleur tubulaire (1) conforme à la revendication 4, **caractérisé en ce que**
les tubes du premier ensemble de tubes (3a) sont couplés à une première base (7) comprenant une sortie (7a) pour permettre l'évacuation du fluide de transfert de chaleur, et
les tubes du second ensemble de tubes (3b) sont couplés à une seconde base (8) comprenant une entrée (8a) pour permettre l'admission du fluide de transfert de chaleur.

6. Echangeur de chaleur tubulaire (1) conforme à l'une quelconque des revendications précédentes,
**caractérisé en ce que**
le perçage (6a) de chaque plaque (6) qui est conformé pour permettre le passage du produit à traiter est situé sur la périphérie de chaque plaque (6).

7. Echangeur de chaleur tubulaire (1) conforme à l'une quelconque des revendications précédentes,
**caractérisé en ce que**
chaque plaque (6) du piston comprend un ensemble de barreaux (9) couplés aux plaques (6) respectives de sorte que le déplacement de la tige tubulaire (5a) du piston (5) fasse partie intégrante du déplacement de chacune des plaques (6), et, les barreaux (9) s'étendent au travers des perçages de l'ensemble de perçages (4c) du diaphragme (4).

8. Echangeur de chaleur tubulaire (1) conforme à l'une quelconque des revendications précédentes,
**caractérisé en ce que**
l'entrée (2a) permettant l'admission du produit devant être traité thermiquement est située sur la surface latérale d'une première extrémité du manchon (2), et
la sortie (2b) permettant l'évacuation du produit traité thermiquement est située radialement par rapport à l'a seconde extrémité du manchon (2).

9. Echangeur de chaleur tubulaire (1) conforme à l'une quelconque des revendications précédentes,
**caractérisé en ce que**
le manchon (2) comprend au moins un perçage de drainage (2c) situé à la partie inférieure de ce manchon (2).

10. Echangeur de chaleur tubulaire (1) conforme à l'une quelconque des revendications précédentes,
**caractérisé en ce que**
la tige tubulaire (5a) du piston (5) comprend une tige hydraulique (5b).

11. Echangeur de chaleur tubulaire (1) conforme à l'une quelconque des revendications précédentes,
**caractérisé en ce que**
le manchon tubulaire (2) a une section transversale en forme de U.

12. Echangeur de chaleur tubulaire (1) conforme à la revendication 11, **caractérisé en ce que**
le manchon tubulaire (2) comporte un capuchon couplé sur l'un des côtés du manchon tubulaire (2), ce capuchon fermant les extrémités de la section transversale en forme de U.
